# EUROPÄISCHE PATENTSCHRIFT

(11) **EP 0 781 719 B1**
(45) Veröffentlichungstag und Bekanntmachung des Hinweises auf die Patenterteilung: **13.09.2000**
(21) Anmeldenummer: 96120783.4
(22) Anmeldetag: 23.12.1996
(51) Int. Cl.: B65G 49/08, B28B 13/04

(54) **Verfahren zum Transport nassgepresster, vielfach gelochter Ziegel sowie Transporteinrichtung hierzu**
Method for conveying wet-pressed, perforated bricks and conveying device therefor
Dispositif et procédé pour le transport de briques perforées formées par voie humide

(30) Priorität: 28.12.1995 DE 19549039
(43) Veröffentlichungstag der Anmeldung: 02.07.1997
(73) Patentinhaber: EISENMANN MASCHINENBAU KG (Komplementär: EISENMANN-Stiftung), D-71032 Böblingen (DE)
(72) Erfinder: Schwarz, Helmut, 71032 Böblingen (DE); Bodingbauer, Gerard, 71083 Herrenberg (DE)
(74) Vertreter: Fürst, Siegfried

(56) Entgegenhaltungen:
- DE-A- 2 921 705
- DE-C- 4 037 593
- US-A- 4 808 065
- ZIEGELINDUSTRIE INTERNATIONAL, Nr. 10, Oktober 1995, Seiten 804-812, XP000618149 "INNOVATIVE TECHNIK IM NEUEN ZIEGELWERK EICHHORN INNOVATIVE TECHNOLOGY IN THE NEW EICHHORN BRICKWORKS"

## Beschreibung

Die Erfindung bezieht sich auf ein Verfahren nach dem Oberbegriff des Patentanspruches 1 sowie auf eine Transporteinrichtung zur Verfahrensdurchführung.

Für die Trocknung von mehrfach bzw. vielfach gelochten Ziegeln, wie z.B. sogenannte Hintermauerziegel, Poroton-Plangroßblöcke oder auch Wabenziegel, findet verstärkt die seit Mitte der 80er Jahre bekannte konvektive Schnelltrocknung Anwendung. Die Haupttrockenparameter Feuchtigkeit, Temperatur, Luftmenge und Strömungsverhältnisse haben einen großen Einfluß auf die Trockenzeit und die Qualität (Vermeidung von Rissen und Verformungen), wobei bei gleichmäßiger Um- und Durchströmung der feuchten, zu trocknenden Formlinge die besten Ergebnisse erzielbar sind, siehe "Ziegelindustrie International", ZI 11/95, Seiten 860 - 866 und 879, 880.

Seitens der Ziegelhersteller besteht permanent die Forderung, die Trocknungszeiten sowie den dazu notwendigen anlagentechnischen Aufwand zu senken. So ist aus der Zeitschrift "Ziegelindustrie International", ZI 10/95, Seiten 804 bis 812, ein Ziegelwerk bekannt, in dem für die Trocknung von Ziegeln ein kontinuierlich arbeitender Schnelltrockner eingesetzt wird.

Dort werden die durch eine Presse mit nachgeordnetem Universalabschneider gefertigten Ziegel, auch Steine genannt, mit einer dem Universalabschneider zugeordneten Kipp- und Dreheinrichtung unmittelbar nach dem Schneiden vom gepreßten Strang gekippt und gedreht sowie mittels einer zugeordneten Transporteinheit für das Beladen von Trockenkassetten aufgereiht und anschließend mit einem untergreifenden Reihengreifer mit geringer Hubbewegung äußerst sanft auf einen Hubbalken, der die Trockenkassetten durchgreift, umgesetzt. Die Trockenkassetten besitzen einen Stabrostboden, wobei je zwei Stäbe eine Formlingsreihe untergreifen und die Lochung der Formlinge vertikal ausgerichtet ist.

Auch bei einem weiteren Stand der Technik gemäß der DE 40 37 593 C1 werden die Ziegel nach dem Schneiden gleich nach der Presse mittels eines Kippsternes derart gekippt, daß die Lochung senkrecht nach oben zeigt. Die Längsachse der Ziegel weist quer zur Transportrichtung. Zu einem späteren Zeitpunkt wird jeder zweite Ziegel um 180 Grad - bei Beibehaltung der vertikalen Lochausrichtung - gedreht. Eine Umsetzeinrichtung hebt mittels eines Vakuumgreifers je ein Ziegelpaar vom Transportband ab und setzt diese zu Türmchen kreuzweise auf einem Ofenwagen ab.

Aus den voranstehend genannten Seiten 879 und 880 der Ausgabe ZI 11/95 der zitierten Zeitschrift ist die Lagerung der Ziegel für das Durchfahren des Trockenofens auf stabrostartigen Paletten vorgesehen, wobei im Trockenofen zum Transport der Paletten mehrere Rollen-Führungseinrichtungen übereinander angeordnet sein können.

Die Aufgabe der vorliegenden Erfindung besteht deshalb vorrangig darin, Maßnahmen und Mittel zu schaffen, die eine weitere Verbesserung des schonenden und qualitätssichernden Transportes der noch weichen, leicht verformbaren, vielfach gelochten Ziegel von der Presse bis zum Aufsetzen auf einen, einen Trocknerofen durchlaufenden Transportkörper sowie während der Trocknung gewährleisten und einen geringen technisch-ökonomischen Aufwand erfordern; insbesondere für eine Schnelltrocknungsanlage.

Gelöst wird diese Aufgabe durch die in dem Patentanspruch 1 angegebenen verfahrensmäßigen Maßnahmen; die nachgeordneten Patentansprüche 2 bis 6 zeigen zudem Weiterbildungen bzw. Ausführungsvarianten auf. Die Einrichtungsansprüche 7 bis 11 enthalten bauliche Ausgestaltungs- bzw. Einrichtungsmerkmale zur Verfahrensdurchführung.

Die Erfindung geht von einem Verfahren zum Transport naßgepreßter, vielfach gelochter Ziegel aus, bei dem die Ziegel von einer Presse bis zu einem Trocknerofen, insbesondere einem Schnelltrocknerofen, und durch letzteren hindurch transportiert werden, wobei die auf einem Transportband beförderten Ziegel durch Drehung bezüglich der Transportrichtung des Transportbandes für die übergabe an einem den Trocknerofen durchlaufenden Transportkörper beabstandet zueinander ausgerichtet und die für die Trocknung vorgesehene vertikale Ausrichtung der Lochungen der Ziegel durch Kippung erzielt wird.

Neu und wesentlich ist nun an diesem Verfahren, daß das Kippen der Ziegel erst unmittelbar vor dem Umsetzen und Positionieren der Ziegel von dem Transportband auf den Transportkörper erfolgt.

Eine mögliche spezielle Weiterbildung sieht zudem vor, daß mit der Kippbewegung gleichzeitig das Umsetzen und das Positionieren der Ziegel von dem Transportband auf den Transportkörper erfolgt; während bei einer anderen Weiterbildung unter Umständen das Kippen und das Umsetzen der Ziegel voneinander getrennt, jedoch unmittelbar nacheinander erfolgt.

Weitere ergänzende und vorteilhafte verfahrensmäßige Ausgestaltungsvarianten für das neue Verfahren bestehen darin, daß die Ziegel allseits mit Abstand zueinander reihenweise auf dem Transportkörper positioniert werden, wobei der Reihenabstand der gesetzten Ziegel durch Vorschub des Transportkörpers oder durch horizontale Bewegung der Kippeinheit erzeugbar ist.

Kernpunkt der technischen Lehre ist dabei die unmittelbare Anordnung der Kippeinheit an bzw. innerhalb der Beladestation sowie in spezieller Weiterbildung die gleichzeitige Nutzung der zum vertikalen Ausrichten der Lochungen der Ziegel dienenden Kippeinheit zum Umsetzen der Ziegel vom Transportband auf den den Trocknerofen durchlaufenden Transportkörper.

Neben einem verminderten technisch-ökonomischen Aufwand sowie einer Minderung der mechanischen Beanspruchung der noch weichen, leicht verformbaren Ziegel besteht ein weiterer Vorteil in der verbesserten Durchströmung der Ziegel. Die Ausbildung der Auflagefläche des Transportkörpers aus vielfach gelochtem Material wirkt hier zudem positiv.

Zur Durchführung des neuen Transportverfahrens nach mindestens einem der Patentansprüche 1 bis 6 wird dabei vorzugsweise eine Transporteinrichtung eingesetzt, die mindestens dem Anspruch 7 entspricht. Die Merkmale einer derartigen Transporteinrichtung werden nachfolgend anhand von in Zeichnungen schematisiert dargestellten Ausführungsbeispielen vom Prinzip her näher erläutert.

Dabei zeigen die Figuren:
- Fig. 1: eine schematische Gesamtdarstellung der Erfindung,
- Fig.2: eine schematische, perspektivische Ansicht der Elemente zur Beladung des Transportkörpers,
- Fig. 3: eine perspektivische Sicht auf einen beladenen Transportkörper,
- Fig. 4a und 4b: eine Stirnansicht auf den Transportkörper sowie
- Fig. 5a und 5b: mögliche Materialien für die Auflagefläche des Transportkörpers.

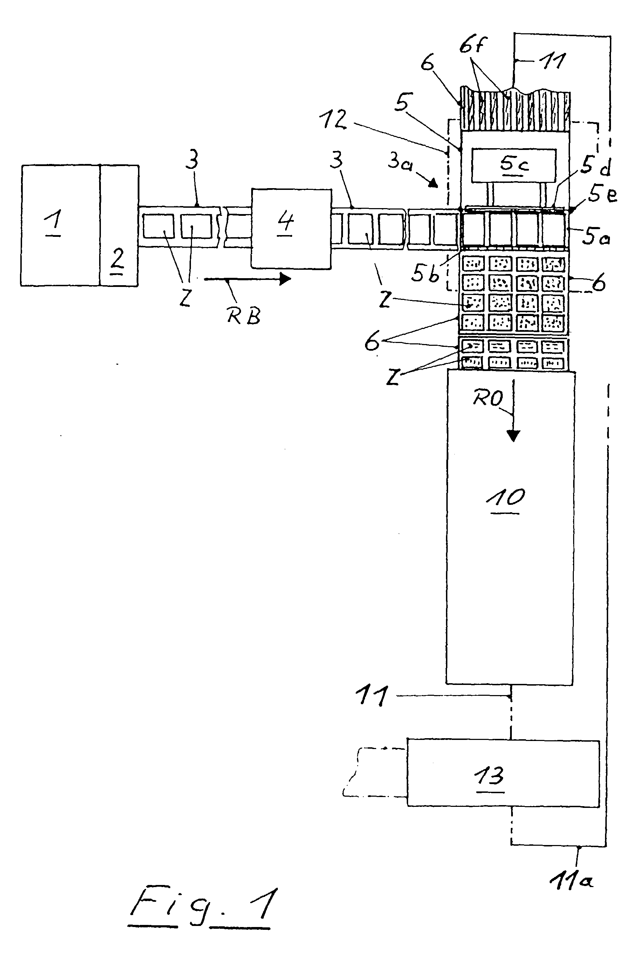

Die Fig. 1 zeigt in stark schematisierter Darstellung eine besagte neue Transporteinrichtung. Diese umfasst ein von einer Presse 1 bis zu einem Trocknerofen 10 führendes Transportbandsystem 3, dem eine Dreheinheit 4 und eine Kippeinheit 5 für die transportierten Ziegel Z zugeordnet sind, mehrere Transportkörper 6, die jeweils eine Vielzahl von zueinander beabstandeten Ziegeln Z für das Durchfahren des Trocknerofens 10 haltern, wobei deren Lochung vertikal ausgerichtet ist, mindestens eine die Transportkörper 6 führende und antreibende, durch den Trocknerofen 10 hindurchgehende und rückgeführte 11a Fördereinrichtung 11 sowie jeweils mindestens eine dem Trocknerofen 10 vor- bzw. nachgeordnete Be- 12 bzw. Entladestation 13.

Wesentlich ist bei dieser neuen Transporteinrichtung nun, daß die Kippeinheit 5 in der Beladestation 12 angeordnet ist und mit dem jeweils dort 12 positionierten Transportkörper 6 in Wirkverbindung steht. Es liegt jedoch auch innerhalb der Erfindung, wenn die Kippeinheit 5 der Beladestation 12 unmittelbar vorgeordnet wird.

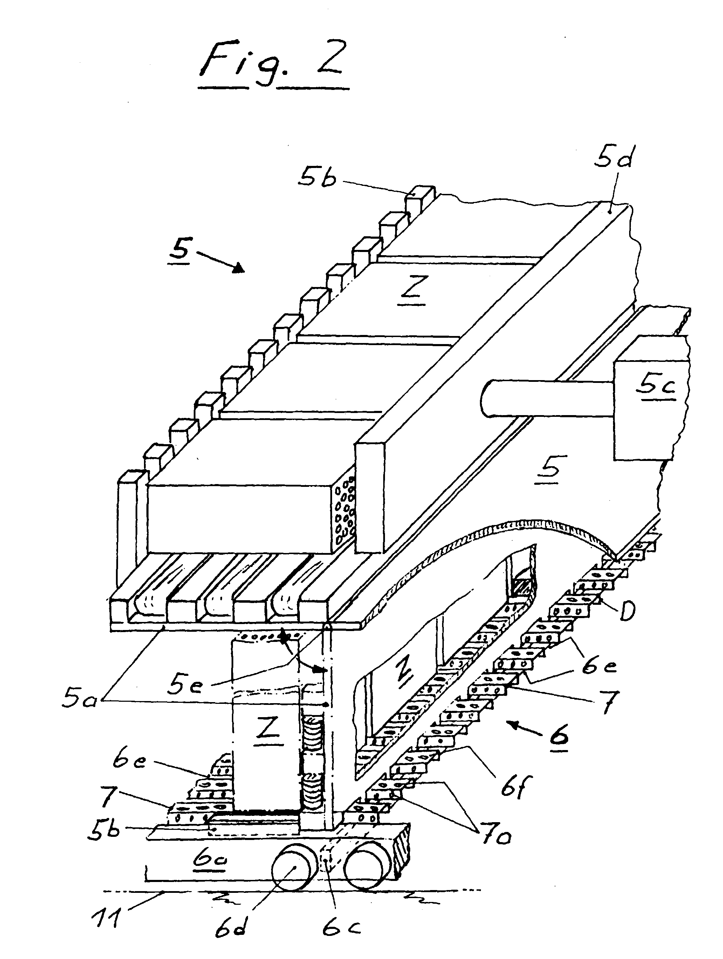

Spezielle bauliche Ausgestaltungen der Kippeinheit 5 werden zudem in der Fig. 2 aufgezeigt.

Die Kippeinheit 5 weist hier eine horizontal liegende Auflage 5a mit integriertem Förderband auf, die mit dem Transportband 3 in der Transportebene fluchtet und stoßfrei an dem Endbereich 3a anschließt. An einer Längsseite der Auflage 5a sind aufwärts gerichtete, rechenartig zueinander beabstandete Zinken 5b und letzteren 5b gegenüberliegend ein Schubelement 5c, mit einer auf die dazwischen liegenden Ziegel Z wahlweise einwirkenden Platte 5d, angeordnet. Die Auflage 5a mitsamt den Zinken 5b ist um eine horizontale Kippachse 5e in die Vertikale kippbar, derart, daß die Zinken 5b in nutartige Freiräume 6e des Transportkörpers 6 eintauchbar sind und die beabstandet aufgereihten Ziegel Z mit vertikal ausgerichteter Lochung auf den Transportkörper 6, 6f aufgesetzt werden.

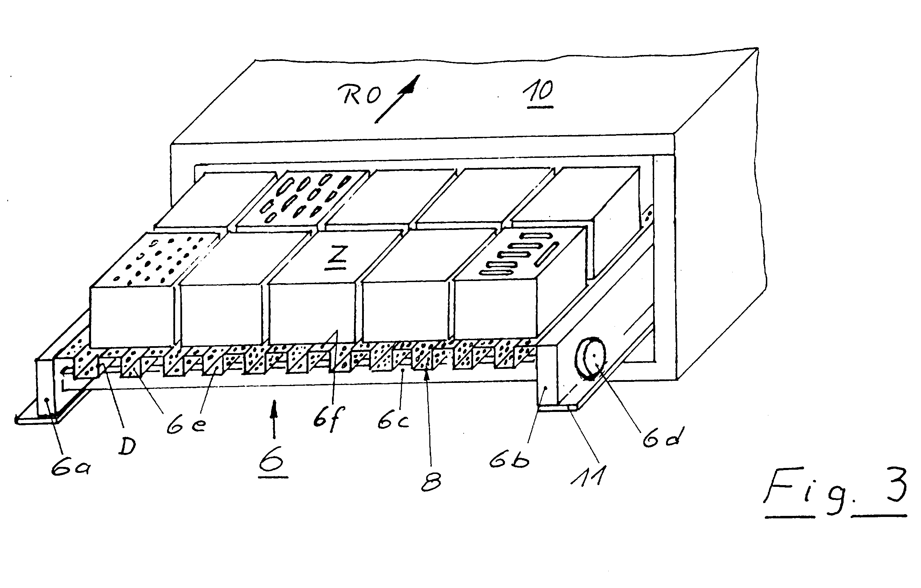

Die Fig. 3 zeigt einen besagten Transportkörper 6, der 6 bezüglich der durch den Trocknerofen 10 führenden Transportrichtung R0 jeweils seitwärts liegende Längsträger 6a und 6b und mehrere letztere 6a und 6b verbindende Querträger 6c besitzt, die gemeinsam einen Grundkörper bilden, der zudem beidseits mit mehreren Rollen 6d ausgestattet ist. Die Auflagefläche 6f für die Ziegel Z besteht hier aus mehreren, parallel zu den Längsträgern 6a und 6b liegende und auf den Querträgern 6c befestigte, zueinander beabstandete, nutartige Freiräume 6e bildende Tragstäbe 7, wobei die Tragstäbe 7 vorzugsweise eine Vielzahl vertikal gerichteter Durchbrüche 7a aufweisen.

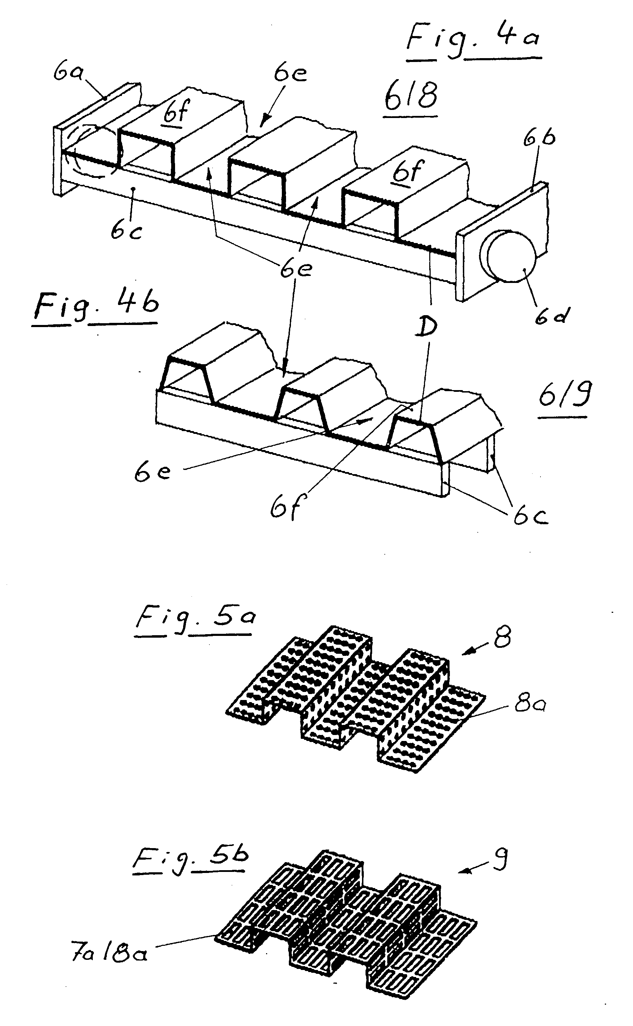

Weitere vorteilhafte Details für einen in der vorliegenden neuen Transporteinrichtung einsetzbaren Transportkörper 6 sind schematisch in den Figuren 4a bis 5b dargestellt.

So kann die Auflagefläche 6f durch eine zweckentsprechend profilierte Platte 8, 9 mit sehr geringer Dicke D und einer Vielzahl von Löchern 8a gebildet werden, wobei die Löcher 8a in der Blechplatte 8, 9 speziell angeordnet und speziell geformt sind, z.B. eine Bohrung o. dgl. bis hin zu einer gitterartigen Struktur.

Zudem können die Tragstäbe 7 aus U-förmigem Loch-oder Gitterblech bestehen, wobei die öffnung der U-Form abwärts zeigt.

Voranstehend wurde davon ausgegangen, daß der in den Zeichnungen dargestellte Trocknerofen 10 kontinuierlich arbeitet. Mit einem periodisch betriebenen Trocknerofen ist die Erfindung sinngemäß jedoch auch realisierbar.

### Bezugsziffernverzeichnis

- 1: Presse
- 2: Abschneider
- 3: Transportband
- 3a: Endbereich
- 4: Dreheinheit
- 5: Kippeinheit
- 5a: Auflage mit Förderband
- 5b: Zinken
- 5c: Schubelement
- 5d: Platte
- 5e: Kippachse
- 6: Transportkörper
- 6a, 6b: Längsträger (L-, I- oder L-förmig)
- 6c: Querträger (Flacheisen, hochkant)
- 6d: Rollen
- 6e: nutartige Freiräume
- 6f: Auflagefläche
- 7: Tragstäbe
- 7a: Durchbrüche
- 8: Platte
- 8a: Löcher
- 9: Platte
- 10: Trocknerofen
- 11: Fördereinrichtung
- 11a: Rücklauf
- 12: Beladestation
- 13: Entladestation

- D: Dicke
- RB: Transportrichtung des Transportbandes
- RO: Transportrichtung durch den Ofen
- Z: Ziegel

## Patentansprüche

1. Verfahren zum Transport naßgepreßter, vielfach gelochter Ziegel (Z) von einer Presse (1) bis zu einem Trocknerofen (10), insbesondere einem Schnelltrocknerofen, und durch letzteren hindurch, bei dem die für die Trocknung vorgesehene vertikale Ausrichtung der Lochungen der Ziegel (Z) durch Kippung erzielt wird, die auf einem Transportband (3) beförderten Ziegel (Z) durch Drehung bezüglich der Transportrichtung (RB) des Transportbandes (3) für die Übergabe an einen den Trocknerofen (10) durchlaufenden Transportkörper (6) beabstandet zueinander ausgerichtet und bei dem die Ziegel (Z) durch Umsetzen und Positionieren auf dem Transportkörper (6) plaziert werden,
**dadurch gekennzeichnet,**
daß das Kippen der Ziegel (Z) erst unmittelbar, d.h. als letzter Arbeitsschritt, vor dem Umsetzen und Positionieren oder Gleichzeitig mit dem Umsetzen und Positionieren der Ziegel (Z) von dem Transportband (3) auf den quer verlaufenden Transportkörper (6) erfolgt.

2. Verfahren nach Anspruch 1,
**dadurch gekennzeichnet,**
daß mit der Kippbewegung gleichzeitig das Umsetzen und das Positionieren der Ziegel (Z) von dem Transportband (3) auf den Transportkörper (6) erfolgt.

3. Verfahren nach Anspruch 1,
**dadurch gekennzeichnet,**
daß das Kippen und das Umsetzen der Ziegel (Z) voneinander getrennt, jedoch unmittelbar nacheinander erfolgt.

4. Verfahren nach einem der Ansprüche 1 bis 3,
**dadurch gekennzeichnet,**
daß die Ziegel (Z) allseits mit Abstand zueinander reihenweise auf dem Transportkörper (6) positioniert werden.

5. Verfahren nach einem der vorhergehenden Ansprüche,
**dadurch gekennzeichnet,**
daß der Reihenabstand der gesetzten Ziegel (Z) durch Vorschub des Transportkörpers (6) erreicht wird.

6. Verfahren nach den Ansprüchen 2 und 4,
**dadurch gekennzeichnet,**
daß der Reihenabstand der gesetzten Ziegel (Z) durch horizontale Bewegung der Kippeinheit (5) erzielt wird.

7. Transporteinrichtung zur Durchführung des Verfahrens nach mindestens einem der Ansprüche 1 bis 6,
umfassend ein von einer Presse (1) bis zu einem Trocknerofen (10) führendes ein Transportband (3) aufweisendes Transportsystem (3), dem eine Dreheinheit (4) und eine Kippeinheit (5) für die transportierten Ziegel (Z) zugeordnet sind, mehrere Transportkörper (6) die jeweils eine Vielzahl von zueinander beabstandeten Ziegeln (Z), deren Lochung vertikal ausgerichtet ist, für das Durchfahren des Trocknerofens (10) haltern, mindestens eine die Transportkörper (6) führende und antreibende, durch den Trocknerofen (10) hindurchgehende und rückgeführte (11a) Fördereinrichtung (11) sowie jeweils mindestens eine dem Trocknerofen (10) vor- bzw. nachgeordnete Be. (12) bzw. Entladestation (13),
**dadurch gekennzeichnet,**
daß die Kippeinheit (5), deren Kippachse (5e) parallel zum Transportband (3) und quer zur Transportrichtung (RO) der Transportkörper ausgerichtet ist, in der Beladestation (12) angeordnet bzw. mindestens letzterer (12) unmittelbar räumlich vorgeordnet ist.

8. Transporteinrichtung nach Anspruch 7,
**dadurch gekennzeichnet,**
daß die Kippeinheit (5) eine horizontal liegende Auflage (5a) mit integriertem Förderband aufweist, die mit dem Transportband (3) und in dessen Transportebene fluchtet und stoßfrei an dem Endbereich (3a) des Transportbandes (3) anschließt, daß an einer Längsseite der Auflage (5a) aufwärts gerichtete, rechenartig zueinander beabstandete Zinken (5b) und letzteren (5b) gegenüberliegend ein Schubelement (5c), mit einer auf die dazwischen liegenden Ziegel (Z) wahlweise einwirkenden Platte (5d), angeordnet sind, und daß die Auflage (5a) mitsamt den Zinken (5b) um eine horizontale Kippachse (5e) in die Vertikale kippbar ist, derart, daß die Zinken (5b) in nutartige Freiräume (6e) des Transportkörpers (6) eintauchen und die beabstandet aufgereihten Ziegel (Z) mit vertikal ausgerichteter Lochung auf dem Transportkörper (6, 6f) aufsetzen.

9. Transporteinrichtung nach einem der Ansprüche 7 und 8,
**dadurch gekennzeichnet,**
daß der Transportkörper (6) bezüglich der durch den Trocknerofen (10) führenden Transportrichtung (RO) jeweils seitwärts liegende Längsträger (6a und 6b) und mehrere letztere (6a und 6b) verbindende Querträger (6c) besitzt, die gemeinsam einen Grundkörper bilden, der zudem beidseits mit mehreren Rollen (6d) ausgestattet ist, daß die Auflagefläche (6f) für die Ziegel (Z) aus mehreren, parallel zu den Längsträgern (6a und 6b) liegende und auf den Querträgern (6c) befestigte, zueinander beabstandet, nutartige Freiräume (6e) bildende Tragstäbe (7) besteht, und daß die Tragstäbe (7) eine Vielzahl vertikal gerichteter Durchbrüche (7a) aufweisen.

10. Transporteinrichtung nach Anspruch 9,
**dadurch gekennzeichnet,**
daß die Auflagefläche (6f) durch eine zweckentsprechend profilierte Platte (8, 9) mit sehr geringer Dicke (D) und einer Vielzahl von Löchern (8a) gebildet wird, wobei die Löcher (8a) in der Blechplatte (8, 9) speziell angeordnet und speziell geformt sind, z.B. eine Bohrung o. dgl. bis hin zu einer gitterartigen Struktur.

11. Transporteinrichtung nach Anspruch 9,
**dadurch gekennzeichnet,**
daß die Tragstäbe (7) aus U-förmigem Loch- oder Gitterblech bestehen, wobei die öffnung der U-Form abwärts zeigt.

## Claims

1. Method of transporting wet-pressed, multiply apertured bricks (Z) from a press (1) to a drying kiln (10), especially a fast-drying kiln, and through the latter, in which the vertical orientation, which is provided for the drying, of the apertures of the bricks (Z) is achieved by tipping, the bricks (Z) conveyed on a transport belt (3) are oriented at a spacing from one another, by rotation with respect to the transport direction (RB) of the transport belt (3), for transfer to a transport body (6) running through the drying kiln (10) and in which the bricks (Z) are placed on the transport body (6) by transposing and positioning, characterised in that the tipping of the bricks (Z) is carried out only immediately, i.e. as final working step, before the transposing and positioning or simultaneously with the transposing and positioning of the bricks (Z) from the transport belt (3) onto the transversely running transport body (6).

2. Method according to claim 1, characterised in that the transposing and the positioning of the bricks (Z) from the transport belt onto the transport body (6) takes place simultaneously with the tipping movement.

3. Method according to claim 1, characterised in that the tipping and the transposing of the bricks (Z) are carried out separately from each other, but one directly after the other.

4. Method according to one of claims 1 to 3, characterised in that the bricks (Z) are positioned on the transport body (6) in rows with a spacing all round from each other.

5. Method according to one of the preceding claims, characterised in that the row spacing of the placed bricks (Z) is achieved by advance of the transport body (6).

6. Method according to claims 2 and 4, characterised in that the row spacing of the placed bricks (Z) is achieved by horizontal movement of the tipping unit.

7. Transport equipment for carrying out the method according to at least one of claims 1 to 6, comprising a transport system (3) which leads from a press (1) to a drying kiln (10) and has a transport belt (3) and which is associated with a turning unit (4) and a tipping unit (5) for the transported bricks (Z), several transport bodies (6) which each hold a 5 plurality of mutually spaced bricks (Z), the apertures of which are vertically oriented, for movement through the drying kiln (10), at least one conveying equipment (11), which guides and drives the transport bodies (6) and which goes through the drying kiln (10) and is led back (11a), as well as at least one loading station (10) arranged in front and at least one unloading station (13) arranged behind the drying kiln (10), characterised in that the tipping unit (5), the tip axis (5e) of which is oriented parallelly to the transport belt (3) and transversely to the transport direction (RO) of the transport bodies, is arranged in the loading station (12) or at least directly spatially in front of the latter (12).

8. Transport equipment according to claim 7, characterised in that the tipping unit (5) comprises a horizontally disposed support (5a) with integrated conveying belt, which is aligned with the transport belt (3) and in the transport plane thereof and adjoins the end region (3a) of the transport belt (3) in jolt-free manner, that upwardly directly and mutually spaced rake-like tines (5b) are arranged at one longitudinal side of the support (5a) and a pusher element (5c) with a plate (5d) selectably acting on the intermediately disposed bricks (Z) is arranged opposite the tines (5b), and that the support (5a) inclusive of the tines (5b) is tippable into the vertical about a horizontal tip axis (5e) in such a manner that the tines (5b) dip into groove-like free spaces (6e) of the transport body (6) and place the spaced-apart rows of bricks (Z) with vertically oriented apertures on the transport body (6, 6f).

9. Transport equipment according to one of claims 7 and 8, characterised in that the transport body (6) has longitudinal beams (6a and 6b), which are each disposed laterally with respect to the transport direction (RO) leading through the drying kiln (10), and several transverse beams (6c), which connect the longitudinal beams (6a and 6b), the longitudinal and transverse beams together forming a base body which is in addition equipped at both sides with several rollers (6d), that the support surface (6f) for the bricks (Z) consists of several mutually spaced carrier rods (7), which lie parallel to the longitudinal beams (6a and 6b) and are fastened to the transverse beams (6c) and which form groove-like free spaces (6e), and that the carrier rods (7) have a plurality of vertically directed passages (7a).

10. Transport equipment according to claim 9, characterised in that the support surface (6f) is formed by a plate (8, 9), which is profiled in accordance with purpose, with very small thickness (D) and a plurality of apertures (8a), wherein the apertures (8a) are specially arranged and specially formed in the sheet metal plate (8, 9), for example a drilling or the like to form a lattice structure.

11. Transport equipment according to claim 9, characterised in that the carrier rods (7) consist of U-shaped apertured or perforated sheet, wherein the opening of the U-shape faces downwardly.

## Revendications

1. Procédé de transport de briques multiplement perforées et formées par voie humide (Z), depuis une presse (1) jusqu'à un four de séchage (10), en particulier un four de séchage rapide, et par passage à travers celui-ci, dans lequel l'orientation des perforations des briques (Z) prévue à la verticale pour le séchage est réalisée par renversement, les briques (Z) transportées sur une bande transporteuse (3) étant orientées de façon espacée les unes par rapport aux autres par rotation par rapport à la direction de transport (RB) de la bande transporteuse (3) pour être délivrées à un organe de transport (6) traversant le four de séchage (10) et dans lequel les briques (Z) sont placées par déplacement et positionnement sur l'organe de transport (6), caractérisé en ce que le renversement des briques (Z) ne s'effectue qu'immédiatement avant le déplacement et le positionnement ou simultanément au déplacement et au positionnement des briques (Z) de la bande transporteuse (3) sur l'organe de transport (6) circulant transversalement, c'est-à-dire en tant qu'ultime étape de travail.

2. Procédé selon la revendication 1, caractérisé en ce que le déplacement et le positionnement des briques (Z) de la bande transporteuse (3) sur l'organe de transport (6) s'effectuent simultanément au mouvement de renversement.

3. Procédé selon la revendication 1, caractérisé en ce que le renversement et le déplacement des briques (Z) s'effectuent séparément l'un de l'autre, mais immédiatement consécutivement.

4. Procédé selon l'une des revendications 1 à 3, caractérisé en ce que les briques (Z) sont de tout côté positionnées de façon espacée les unes des autres et en rangées sur l'organe de transport (6).

5. Procédé selon l'une des revendications précédentes, caractérisé en ce que l'écartement entre les rangées de briques posées (Z) est obtenu par avancement de l'organe de transport (6).

6. Procédé selon les revendications 2 et 4, caractérisé en ce que l'écartement entre les rangées de briques posées (Z) est obtenu par déplacement horizontal de l'unité de renversement (5).

7. Dispositif de transport pour la mise en oeuvre du procédé selon au moins l'une des revendications 1 à 6, comprenant un système de transport (3) comportant une bande transporteuse (3) menant d'une presse (1) à un four de séchage (10) auquel sont associées une unité de rotation (4) et une unité de renversement (5) pour les briques transportées (Z), plusieurs organes de transport (6) qui chacun supportent une pluralité de briques espacées les unes des autres (Z) et dont les perforations sont orientées verticalement, pour le passage à travers le four de séchage (10), au moins un dispositif de transport (11) entraînant et guidant l'organe de transport (6), traversant le four de séchage (10) dans le sens aller et le sens retour (11a), ainsi que respectivement au moins une station de chargement (12) ou, selon les cas, une station de déchargement (13) placée avant ou, selon les cas, après le four de séchage (10), caractérisé en ce que l'unité de renversement (5), dont l'axe de renversement (5e) est orienté parallèlement à la bande transporteuse (3) et transversalement à la direction de transport (RO) des organes de transport, est disposée dans la station de chargement (12) ou bien, selon les cas, prévue spatialement au moins immédiatement avant celle-ci (12).

8. Dispositif de transport selon la revendication 7, caractérisé en ce que l'unité de renversement (5) présente un support disposé horizontalement (5a) avec une bande transporteuse intégrée, qui est aligné avec la bande transporteuse (3) et son plan de transport et qui se raccorde sans à-coups à la zone d'extrémité (3a) de la bande transporteuse (3), en ce que des dents (5b) sont disposées sur une face longitudinale du support (5a), orientées vers le haut, espacées entre elles à la façon d'un râteau, et en ce qu'un élément pousseur (5c) est associé à celles-ci (5b), avec une plaque (5d) agissant à volonté sur les briques (Z) placées dans l'intervalle, et en ce que le support (5a), conjointement avec les dents (5b), peut être basculé à la verticale autour d'un axe de renversement horizontal (5e), de telle sorte que les dents (5b) plongent dans des espacements de type rainures (6e) de l'organe de transport (6) et placent les briques alignées de façon espacée entre elles (Z), la perforation étant orientée à la verticale, sur l'organe de transport (6, 6f).

9. Dispositif de transport selon l'une des revendications 7 et 8, caractérisé en ce que l'organe de transport (6) possède respectivement des supports longitudinaux (6a et 6b) disposés latéralement par rapport à la direction de transport (RO) traversant le four de séchage (10) et plusieurs supports transversaux (6c) reliant ceux-ci (6a et 6b), qui ensemble forment un corps de base, qui est par ailleurs pourvu des deux côtés de plusieurs rouleaux (6d), en ce que la surface de support (6f) pour les briques (Z) se compose de plusieurs barres de support (7) disposées parallèlement aux supports longitudinaux (6a et 6b), fixées aux supports transversaux (6c) de façon espacée et qui forment des espacements de type rainures (6e), et en ce que les barres de support (7) comportent une pluralité de percées orientées verticalement (7a).

10. Dispositif de transport selon la revendication 9, caractérisé en ce que la surface de support (6f) est formée par une plaque profilée de façon pratique (8, 9) d'une très faible épaisseur (D) et comportant une pluralité de perforations (8a), les perforations (8a) étant spécialement disposées dans la plaque de tôle (8, 9) et spécialement formées, par ex. en alésages ou équivalent, jusqu'à obtention d'une structure de type grille.

11. Dispositif de transport selon la revendication 9, caractérisé en ce que les barres de support (7) se composent d'une tôle grillagée ou perforée en forme de U, l'ouverture du U étant orientée vers le bas.
